# EUROPEAN PATENT SPECIFICATION

(11) **EP 3 988 784 B1**
(45) Date of publication and mention of the grant of the patent: **27.11.2024**
(21) Application number: 20203211.6
(22) Date of filing: 22.10.2020
(51) Int. Cl.: F03H 1/00, B64G 1/50, B64G 1/40

(54) **ELECTRIC ROCKET ENGINE COOLING SYSTEM**
KÜHLSYSTEM FÜR EIN ELEKTRISCHES RAKETENTRIEBWERK
SYSTÈME DE REFROIDISSEMENT DE MOTEUR DE FUSÉE ÉLECTRIQUE

(43) Date of publication of application: 27.04.2022
(73) Proprietor: CRYOGENIC AND VACUUM SYSTEMS, SIA, 3601 Ventspils (LV)
(72) Inventor: Kravchenko, Sergey, LV-3601 Ventspils (LV); Kuleshov, Nikolay, LV-1005 Riga (LV); Panova, Natalia, LV-3601 Ventspils (LV)
(74) Representative: Fortuna, Jevgenijs

(56) References cited:
- CN-A- 107 795 446
- US-A- 3 016 693
- US-A- 3 359 734
- US-A1- 2020 283 174

## Description

### Technical field

The invention relates to aerospace engineering, and more particularly to electric rocket engine (ERE) cooling systems intended for regulating the temperature conditions of an area thermally affected by electrons and/or plasma ions and/or an electromagnetic field.

### Prior art

An engine cooling system is a combination of units ensuring that a coolant is brought to heated parts of an engine and excess heat is removed therefrom. A cooling system is intended to maintain an optimal thermal condition of the engine, since both overheating and overcooling of the engine can worsen or disrupt its performance. Therefore, a cooling system should limit both the upper and lower temperature extremes, ensuring the best conditions for engine operation.

At present, electric rocket engine forced cooling systems are not being used in rocketry. The vacuum of space that surrounds an electric rocket engine is a highly effective thermal insulator, and the processes of convection and heat conduction are absent in space; the only mechanism for heat transfer is radiation. Electric rocket engines operate with very small masses of propellant, approximately two orders of magnitude smaller than chemical rocket or turbojet engines. Electric rocket engine propellant has a temperature of tens of thousands of degrees, in contrast to the propellant of turbojet and chemical rocket engines, the temperature of which is substantially lower and generally has a negative temperature on the Celsius scale when it enters the engine. These two circumstances make the propellant of turbojet and chemical rocket engines applicable to the task of cooling the combustion chambers of such engines, in contrast to the propellant of electric rocket engines.

There is known a spacecraft thermal and fluid management system and a method (US 2020/283174 A1) the method comprising: storing propellant in a tank as a mixture of liquid and gas; transferring the propellant out of the tank; converting the mixture of liquid and gas propellant into a single phase, where the single phase is either liquid or gaseous; and supplying the single phase of the propellant to a thruster.

There is also known an arrangement for regenerative cooling of the supersonic portion of the nozzle of a liquid rocket engine (RU2514570C1). According to the known solution, in the circle of coolant circulation, a check valve is installed on the line connecting the cooling channel exit of the supersonic portion of the nozzle with the turbine intake, while a coolant tank with a valve is connected to that line in the section between the check valve and the turbine; furthermore, on the section of the line between the cooling channel exit of the supersonic portion of the nozzle and the check valve, a storage tank or an exhaust pipe with a valve is connected. This system is proposed for use in liquid rocket engines. However, it is not applicable to electric rocket engines for spacecraft, since its construction does not have design features for operating in weightlessness; specifically, the propellant must be under atmospheric pressure and the force of gravity, in other words, have some sort of internal pressure to avoid cavitation of the propellant during pump operation. In this cooling system, the propellant evaporates upon cooling the engine and rotates the turbine; then, if the system is closed, the internal pressure therein increases sharply, which can damage the engine, and if the system is not closed, this can result in vapor being ejected from the cooling system out of the spacecraft, and in order to condense the vapors, an additional cooling system with heat dissipation efficiency comparable to this system will be required. In transient conditions this system uses the principle of the dump cooling system, when the propellant is ejected outside of the craft on which the engine is installed, i.e., for long-term operation it requires continuous replenishment of propellant reserves or a sufficiently large propellant reserve. Another characteristic of orbital or deep space craft is the very low temperatures of the surrounding space. However, the start-up of this cooling system is designed for when the propellant is in a liquid state, i.e., when environmental temperatures are substantially higher, such as in the atmosphere, and this is substantially higher than the temperature in open space. Since no preheating of the cooling system is provided in this system, then after any stoppage this cooling system cannot be restarted.

There is known an ion accelerator arrangement comprising a device for dissipating lost heat (EP2191132B1). According to the known solution, the heat conduction arrangement surrounds the carrier structure, while the carrier structure surrounds the space in which the source of lost heat is disposed. The heat conduction arrangement lies against the carrier structure under elastic bracing, thereby resulting in a permanent and large-area heat transfer at the boundary surface between the carrier structure and the heat conductor. The carrier structure contains a magnetic arrangement containing permanent magnets. This system is not a forced cooling system; in this arrangement the radiative cooling effectiveness is increased primarily by means of the installation of an additional cooling system element with a chamber filled with a volatile substance which cools the wall of said chamber in its most heated place and transfers the heat in the form of vapor to a less heated place. In other words, natural cooling resulting from convective heat and mass transfer is used. This system decreases the amount of heat transferred to other elements of the engine, but not dramatically so, while substantially increasing the weight of the structure. This type of cooling system has not gained widespread use in magneto plasma dynamic thrusters because it is not highly effective. This type of system does not allow the temperature of the element being cooled to be regulated, and therefore must be designed for maximum loads; this may result in decreased efficiency in other conditions. When this type of system is used, additional thermal insulation of the load-carrying portions of the engine is required.

### Disclosure of invention

The purpose of the invention is to eliminate the drawbacks of the prior art This purpose is achieved by the proposed electric rocket engine forced cooling system intended for regulating the temperature conditions of an area thermally affected by electrons and/or plasma ions and/or an electromagnetic field. The invention is set forth in the claims. In particular, a system according to claim 1 or claim 4 is proposed. This system may also be supplied with a safety valve, the inlet of which is connected via a tube with the cooling system circles in which working substance circulates. In addition, the system may also be equipped with radiator shutters that make it possible to regulate the active surface area of the radiator.

Additionally, a system according to claim 7 is proposed. This system may also be supplied with a safety valve, the inlet of which is connected via a tube with the cooling system circles in which the working substance circulates. In addition, the system may also be equipped with radiator shutters that make it possible to regulate the active surface area of the radiator.

### Brief description of drawings

Fig. 1 shows a diagram of the electric rocket engine forced cooling system;
Fig. 2 shows a diagram of the embodiment of the forced cooling system with a safety valve;
Fig. 3 shows a diagram of the embodiment of the forced cooling system with preheating of specific parts of the engine;
Fig. 4 shows a diagram of the embodiment of the forced cooling system with condensation of the vapor phase of the coolant

### Detailed description of the invention

A forced cooling system is intended to decrease the temperature of the most heat-stressed components of the structure (for example, the walls of the electrostatic discharge chamber of electric rocket engines) and to prevent dissipation of heat to other parts of the engine structure that operate at a controlled temperature. In the forced cooling system, a forced working substance flow is used that by virtue of its heat and mass transfer collects heat from the hottest components of the structure and, bypassing the main elements of the engine structure, transfers this heat by means of auxiliary elements of the engine structure, including radiators that extend outside the engine area, for further dissipation into space.

An electric rocket engine cooling system intended for regulating the temperature conditions of an area thermally affected by electrons and/or plasma ions and/or an electromagnetic field is proposed. The system differs from radiant and radiant-convection electric rocket engine cooling systems in that it is forced and comprises, at a minimum, a power unit - a pump 1 providing continuous working substance flow in the cooling system without cavitation developing; a cooling jacket 2 on the engine parts that surrounds and/or is built in to the ERE parts that require cooling; a working substance storage reservoir 3 that provides the cooling system with working substance in the required quantity, including in the event of working substance loss during electric rocket engine operation, and that serves as a vapor condenser due to working substance mass and temperature when that heated portion of the working substance that had passed through the heated areas of the ERE passes through the reservoir; an expansion tank 4 in the form of a hydraulic accumulator that ensures that the required pressure is maintained in the cooling system to prevent vapor formation and to prevent damage to ERE parts when there is overheating/overcooling by working substance during ERE operation; a small circle thermostatic valve 5 that regulates working substance flow through the radiator, thereby keeping the temperature of the engine parts being cooled within a given range; a radiator 6 containing one or more segments, including segments equipped with individual temperature regulators, and/or engine parts, including parts equipped with individual temperature regulators, that dissipate heat energy received from the heated working substance; and tubes 7 connecting all of the cooling system elements in the required sequence and feeding cooled working substance into the area of the engine that requires cooling and transferring heat away from the area that requires cooling to the radiator and/or engine part that dissipates the heat energy, including tubes thermally isolated from other parts of the electric rocket engine.

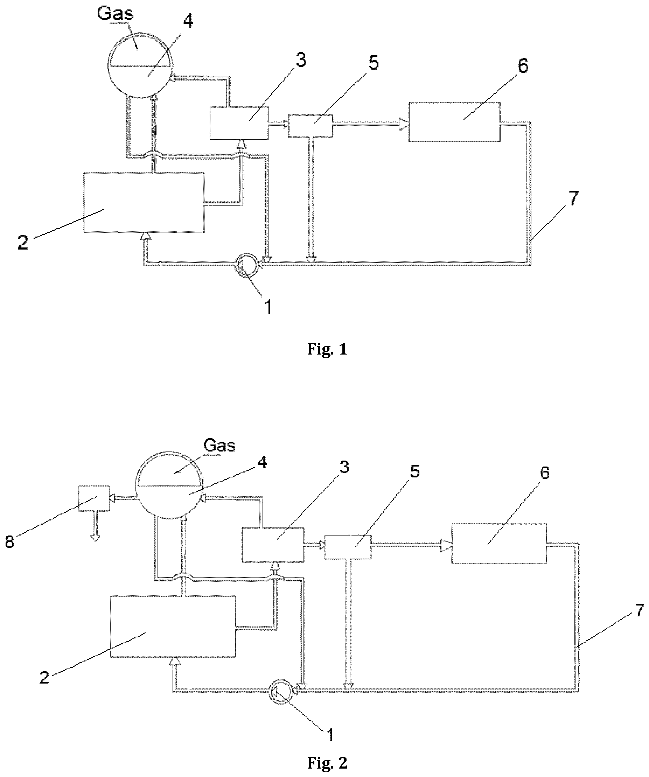

The ERE forced cooling system (Fig. 1) is designed to be capable of maintaining a given temperature range of the engine parts being cooled depending on engine operating mode. The controller assembly receives information from sensors installed in the cooling system, determines the operation of cooling system actuators depending on the specified ERE operating condition and the information received from the sensors, and ensures that a specified cooling system operating condition is maintained.

The forced cooling system with a safety valve (Fig. 2) is additionally supplied with a safety valve to bleed off excess pressure 8 from the system in the event that other methods of decreasing pressure in the cooling system are ineffective and are unable to prevent a further pressure increase that may result in full or partial loss of cooling system operability or full or partial destruction of the system. In the ERE cooling system, various methods of monitoring and warning that working substance is shifting to a vapor state are specified. The first vaporization warning level includes a change in coolant flow through the radiator, thereby increasing their heat exchange and decreasing the working substance temperature at the pump entry and correspondingly at the intake into the area in which ERE parts are cooled. The second working substance vaporization warning level is a change in the operating condition of the pump that feeds working substance into the cooling system. With this, the rate of working substance circulation through the cooling system increases, including through the radiators 6, and heat exchange increases, i.e., the cooling system starts to increase the amount of thermal energy taken from the engine and dissipated into space. A third aspect of increasing the output of the pump 1 is that when this occurs, the pressure in the system increases, thereby increasing the working substance vaporization temperature, and this results in condensation of working substance vapors that had formed when the pressure was lower. A fourth aspect is the fact that increased working substance temperature leads to an increase in the temperature of the gas in the gas pocket in the expansion tank 4 (the hydraulic accumulator), which results in increased pressure in the entire ERE cooling system. If in the event of an off-design ERE operating condition all of these measures do not bring the desired result, namely cessation of a working substance vaporization rate that exceeds the tolerance limit, then the next step is to decrease engine operating condition in order to decrease the amount of heat the engine puts out as it operates, up to and including a full shutdown. However, in a number of cases engine operation must continue, even at the cost of engine breakdown; in such a cases, a decrease in cooling system pressure can be achieved by bleeding off excess pressure through the safety valve 8. This results in partial or even complete loss of working substance or even breakdown, after a certain amount of time, of the cooling system and the ERE itself, but makes it possible to maintain ERE operability for a certain amount of time when necessary in the event of a critical situation.

The forced cooling system may additionally be equipped with shutters for the radiator 6 that make it possible to regulate the active surface area of the radiator 6, thereby facilitating the process of regulating heat removal by the radiator 6 of heat into the environment and thereby keeping the cooling system working substance temperature in the specified range.

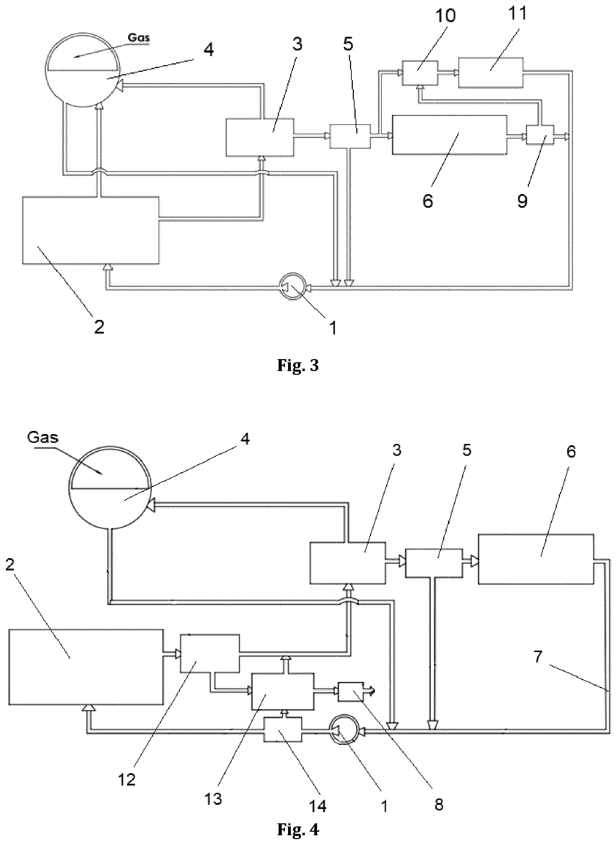

In addition, the forced cooling system may be designed to be capable of preheating those engine parts for which the working temperature range requires additional warming up, decreasing engine consumption of energy from other energy sources, including the hydraulic accumulator 4, including for purposes of regulating the pressure therein by changing the temperature of the vapor and thereby the pressure of the working substance in the cooling system to prevent vaporization and cavitation (Fig. 3). The pump 1 may be in the form of an electric centrifugal pump 1, cryogenic type, i.e., with a longer shaft and with thermally protected bearings that are heated, for instance by heat released by the ERE during operation or by additional heat-releasing elements. Cavitation in this system is prevented by increasing pressure in the cooling system and decreasing working substance temperature mainly in the radiators; therefore the working substance is fed into the pump intake after it passes through the radiators, which cool the working substance.

According to an embodiment of the invention, the forced cooling system may be additionally equipped with devices 12 that make it possible to separate the working substance phases into liquid and vapor in the event that working substance vapor phase forms during system operation (Fig. 4).

According to one more embodiment of the invention, the forced cooling system may additionally be supplied with heat-emitting elements 20 that preheat the working substance and parts of the cooling system in the event that the working substance has transitioned to a solid state from the effect of the low temperatures in the surrounding space, including when the engine is inactive for a long period.

The following may be used as heat-emitting elements of the cooling system, depending on the structural elements that require preheating: patches that can be stuck onto the surface of parts, such as those used in de-icing systems in aviation and wind power engineering; heating blankets for parts that are complex in shape, such as those used in the manufacture and repair of structures made of composite materials; and heat tape and heat wire.

The sequence in which the individual parts of the preheating system switch on and off is determined by the control unit, which receives information on the temperature of cooling system parts from the temperature and pressure sensors used by the cooling system to regulate the temperature conditions of the individual ERE parts during normal operation.

The ERE cooling system does not function when the engine is not operating, and if the ERE with the cooling system in question is located on a mechanism that is out in space, it is in a cooled state, i.e., at the temperature of space, which is close to absolute zero, and the working substance is in a solid state. Therefore, before the engine is turned on, a process of thawing out the engine cooling system may be required, i.e., preheating the engine cooling system to bring the working substance from a solid to a liquid state using electrical heating elements installed on parts of the engine. Initially, the small circle of the ERE cooling system is thawed, according to one embodiment of the invention which comprises a pump 1, a cooling jacket 2, a working substance reservoir 3, an expansion tank 4, a small circle thermostatic valve 5, a radiator 6, pipes 7 with working substance that connect the various elements of the cooling system, a safety valve 8 for bleeding off excess system pressure (optional), a valve 9 on a heater 11, a mixer 10, an engine parts heater 11, a vapor separator 12 that ensures there is no vapor at the intake of the engine cooling jacket, a working substance vapor phase condensing unit 13, and a device 14 for detecting and separating the vapor-phase working substance.

This configuration makes it possible to operate ERE in low-thrust modes. Such a mode is used to preheat the ERE and its systems. After the working substance transitions to a liquid state, the pump 1 is turned on, which forces working substance into device 14, which is made in the form of a vapor separating device and equipped with a sensor to detect the presence of vapor phase in the working substance, at the intake of the engine cooling jacket Device 14 is also essentially a vapor separator, and when vapor is present in the working substance, the device removes it from the liquid phase and sends the liquid phase into the cooling jacket 2 of the ERE, while the vapor is sent to the vapor condenser device, and a signal is sent to the ERE control unit regarding the presence of vapor phase in the working substance at the exit of the pump 1. Such a state of working substance is off-design and therefore the control unit decreases engine operating condition until this working substance condition is remedied, up to and including turning off the engine. The working substance in liquid form enters the engine cooling jacket 2, taking heat energy from the jacket and the heated parts of the engine covered by the jacket, thereby decreasing the temperature of the jacket and the engine parts while becoming heated itself. Under the effect of the pressure created by the pump 1, the heated working substance is forced out of the ERE cooling jacket 2 and enters the vapor separator 12, where it is separated into vapor and liquid phases, if vapor phase is present at the exit of the engine cooling jacket 2. The vapor phase of the working substance is forced out into the vapor condensation unit 13, while the liquid phase is forced out into the reservoir 3 and then via the small circle thermostatic valve 5 to the intake of the pump 1. In this condition the thermostatic valve 5 cuts off the feed of working substance into the radiator 6, and the cycle repeats. When vapor phase of the working substance forms in the engine cooling jacket 2, it is forced out of the vapor separator unit 12 as well as out of device 14 which ensures that there is no vapor at the intake of the engine cooling jacket, into the vapor condenser unit 13, where the vapor is condensed into the liquid phase and fed into the reservoir 3 and from there through the small circle thermostatic valve 5 to the intake of the pump 1. From there, the cycle repeats. As was indicated above, in the process of ERE operation, vapor phase may form in the working substance when its temperature rises. In this case, the volume of the mixed liquid and vapor phase of the working substance exceeds the volume of the liquid phase, and this may result in a sharp pressure increase in the ERE cooling system, since the ERE cooling system is closed, and may destroy it To avoid this, the cooling system is equipped with a hydraulic accumulator 4, to which this additional working substance volume can be displaced. The presence of free space is not permitted in a cooling system in the absence of gravity, since liquid working substance may move there, with the underfilled areas creating obstructions in the cooling system and resulting in cooling system failure. So that the cooling system has no opportunity to develop empty spaces in itself, and so that the cooling system has the capacity for increased working substance volume without disruption of the cooling system, a hydraulic accumulator 4 is used. The hydraulic accumulator 4 holds the additional space not filled with working substance in place by means of a flexible membrane, and the unfilled space cannot move elsewhere in the cooling system; simultaneously, the gas under pressure in the space not filled with working substance in the hydraulic accumulator 4 maintains the required pressure within the cooling system to prevent working substance cavitation in the cooling system pump and smooths the peaks in working substance pressure fluctuation during system operation (the switching on and/or off of various devices and valves). When ERE operating condition is reduced, its temperature drops, and the working substance temperature also drops because of the decreased thermal load on the ERE and the cooling system. This results in a decreased vaporization rate and correspondingly a decrease in the volume of the working substance vapor/liquid phase mixture. When the pressure inside the cooling system drops, under the effect of the gas pressure in the hydraulic accumulator 4, the working substance is forced back into the ERE cooling system. The hydraulic accumulator 4 is also capable of forcing cooling working substance out to the intake of the pump 1 in the event the delivery of working substance under the standard scheme is insufficient, i.e., along the tube 7 from the small circle thermostatic valve 5, which in the mode of working substance circulation in the small circle of the cooling system switches its feed to the radiator 6 and to warming up other elements of the spacecraft Another possible ERE operating condition is the case of intensive vaporization and an inability to condense all of the gas that forms into a liquid in the working substance vapor phase condenser unit 13; in this case, a situation may develop in the cooling system in which the pressure exceeds the maximum allowable and there is no opportunity to decrease the engine operating condition or turn the engine off. In this case, the excess vapor is bled off from the ERE cooling system via the safety valve 8.

It must be noted that the vapor separator 12 and the device 14 also perform the function of a device that equalizes the pressure of working substance flows (in the form of liquid or vapor phase) by throttling them so that none of the flows choke.

If ERE preheating has proceeded normally, then once the ERE is preheated, the small circle thermostatic valve 5 opens the feed of heated working substance into the tube 7 leading to the radiator 6 to decrease the working substance temperature and for subsequent delivery of heated working substance to warm up other parts of the ERE and/or other parts of the spacecraft, and shuts off delivery of working substance along the small circle, i.e., immediately to the intake of the pump 1. In the radiator 6 the working substance is cooled and enters the intake of the valve 9 of the heater 11. The valve 9 of the heater 11 feeds some of the cooled working substance to the intake of the pump 1 and the cycle repeats, while the rest of the working substance is fed into the mixer 10 of the preheating system. The mixer 10 has a second inlet connected with the outlet of valve 5 of the small circle. The heated working substance that comes from the reservoir 3 via the small circle thermostatic valve 5 mixes with cooled working substance that has passed through the radiator 6 and the valve 9 of the heater 11 that controls the supply of working substance to the mixer 10, which controls the proportion required to form a mixture with the temperature specified for heating a specific element of the ERE or the spacecraft, and once it has performed its function it is forced into the intake of the pump 1 of the cooling system and the cycle repeats. It must be noted that the mixture of working substance flows, one from after the radiator 6 and the valve 9 of the heater 11, and the other coming through the tube 7 from the reservoir 3 via the thermostatic valve 5 is cooled in the process of heating the ERE and spacecraft elements and then enters the intake of the pump 1 of the ERE cooling system and the cycle repeats. Another portion of the cooled working substance from after the radiator 6 and the heater valve 9 is forced into the intake of the pump 1 of the cooling system and the cycle repeats. Mixing of the two streams is necessitated by the need to use heated working substance at a temperature that is safe for the elements being heated, since based on their own characteristics they are often not heat-resistant devices. The valve 9 of the heater 11 also performs the function of a device that equalizes the pressure of the two working substance flows by throttling them after the valve 9 of the heater 11, one flow being obtained after the heater 11 and the other flow being obtained immediately after the valve 9, in the direction of the cooling system pump 1 so that none of the flows choke.

The thermostatic valve 5 on the small circle of the cooling system performs the following functions: when the cooling system is starting up, the thermostatic valve 5 is open to feed working substance to the intake of the pump 1, and it cuts off working substance access to the radiator 6 (in one embodiment of the invention, to the mixer 10 as well). After the cooling system has been heated, the small circle thermostatic valve 5 opens to feed working substance to the intake of the radiator 6 (in one embodiment of the invention, to the mixer 10 as well) and shuts off the working substance feed via the tube 7 connecting the outlet of the thermostatic valve 5 with the inlet of the pump 1.

According to a embodiment of the invention, when working substance is fed from the small circle thermostatic valve 5 to the intake of the mixer 10, the mixer 10 supplies the required amount of heated working substance to the heater 11 without mixing it with cooled working substance flows, but if the working substance temperature exceeds established values, then valve 9 of the heater activates, and the working substance cooled in the radiator 6 passes through valve 9 and is fed to the inlet of the mixer 10, which mixes the two working substance flows in the required proportion, one heated that comes from the thermostatic valve 5 and one cooled that comes from the valve 9, and once they are mixed the working substance is fed in the required quantity into the heater 11 to heat elements of the engine structure with a temperature established by technical specifications. After the working substance exits the thermostatic valve 5, it also enters the intake of the radiator 6, which dissipates heat energy obtained from the working substance into the surrounding space, while the working substance loses its heat energy and its temperature decreases correspondingly. As a result, cooled working substance flows out of the radiator 6 and enters the intake of valve 9 of the heater. The valve 9 of the heater feeds the cooled working substance to the intake of the pump 1 and, if a signal is received from the control system, feeds the cooled working substance to the intake of the mixer 10, which regulates the process of mixing the cold and hot working substanceflows.

## Claims

1. An electric rocket engine forced cooling system intended for regulating the temperature conditions of an area thermally affected by electrons and/or plasma ions and/or an electromagnetic field **wherein** the system comprises the following system elements: a pump (1) configured to provide a continuous flow of working substance in the cooling system, the pump (1) having an inlet and an outlet; a cooling jacket (2) that surrounds and/or is built in to parts of the electric rocket engine that require cooling, the cooling jacket (2) having an inlet and a first and second outlet; a reservoir (3) for storing working substance, the reservoir (3) having an inlet and a first and second outlet; a hydraulic accumulator (4) configured to ensure that a required pressure is maintained in the cooling system, the hydraulic accumulator (4) having a first and second inlet and an outlet; a radiator (6) containing one or more segments and configured to dissipate heat energy received from the working substance, wherein the one or more segments are optionally equipped with individual temperature regulators, the radiator (6) having an inlet and an outlet; and a thermostatic valve (5) configured to regulate working substance flow through the radiator (6), the thermostatic valve (5) having an inlet and a first and second outlet; and wherein the system further comprises tubes (7) configured to provide working substance circulation through the cooling system and connecting the abovementioned system elements in the following way: the outlet of the pump (1) is connected with the inlet of the cooling jacket (2), the first outlet of the cooling jacket (2) is connected with the first inlet of the hydraulic accumulator (4), the outlet of the hydraulic accumulator (4) is connected with the inlet of the pump (1), the second outlet of the cooling jacket (2) is connected with the inlet of the reservoir (3), the first outlet of the reservoir (3) is connected with the second inlet of the hydraulic accumulator (4), the second outlet of the reservoir (3) is connected with the inlet of the thermostatic valve (5), the first outlet of the thermostatic valve (5) is connected with the inlet of the pump (1), the second outlet of the thermostatic valve (5) is connected with the inlet of the radiator (6), and the outlet of the radiator (6) is connected with the inlet of the pump (1).

2. The electric rocket engine forced cooling system according to claim 1, **wherein** the system is additionally supplied with heat-emitting elements (20) configured to heat the working substance and optionally the hydraulic accumulator (4).

3. The electric rocket engine forced cooling system according to claims 1 or 2, **wherein** the system is additionally supplied with a safety valve (8), an inlet of the safety valve (8) is connected via a tube (7) with the cooling system.

4. An electric rocket engine forced cooling system intended for regulating the temperature conditions of an area thermally affected by electrons and/or plasma ions and/or an electromagnetic field, **wherein** the system comprises the following system elements: a pump (1) configured to provide a continuous flow of working substance in the cooling system, the pump (1) having an inlet and an outlet; a cooling jacket (2) that surrounds and/or is built in to parts of the electric rocket engine that require cooling, the cooling jacket (2) having an inlet and a first and second outlet; a reservoir (3) for storing working substance, the reservoir (3) having an inlet and a first and second outlet; a hydraulic accumulator (4) configured to ensure that a required pressure is maintained in the cooling system, the hydraulic accumulator (4) having a first and second inlet and an outlet; a radiator (6) containing one or more segments and configured to dissipate heat energy received from the working substance, wherein the one or more segments are optionally equipped with individual temperature regulators, the radiator (6) having an inlet and an outlet; a thermostatic valve (5) configured to regulate working substance flow through the radiator (6), the thermostatic valve (5) having an inlet and a first and second outlet; an engine parts heater (11), the engine parts heater (11) having an inlet and an outlet; a mixer (10), the mixer (10) having a first and second inlet and an outlet; and a valve (9) of the heater (11), the valve (9) of the heater (11) having an inlet and a first and a second outlet; and wherein the system further comprises tubes (7) configured to provide working substance circulation through the cooling system and connecting the abovementioned system elements in the following way: the outlet of the pump (1) is connected with the inlet of the cooling jacket (2), the first outlet of the cooling jacket (2) is connected with the first inlet of the hydraulic accumulator (4), the outlet of the hydraulic accumulator (4) is connected with the inlet of the pump (1), the second outlet of the cooling jacket (2) is connected with the inlet of the reservoir (3), the first outlet of the reservoir (3) is connected with the second inlet of the hydraulic accumulator (4), the second outlet of the reservoir (3) is connected with the inlet of the thermostatic valve (5), the first outlet of the thermostatic valve (5) is connected with the inlet of the pump (1), the second outlet of the thermostatic valve (5) is connected with the inlet of the radiator (6) and the first inlet of the mixer (10), the outlet of the radiator (6) is connected with the inlet of the valve (9) of the heater (11), the first outlet of the valve (9) of the heater (11) is connected with the inlet of the pump (1), the second outlet of the valve (9) of the heater (11) is connected with the second inlet of the mixer (10), the outlet of the mixer (10) is connected with the inlet of the heater (11), and the outlet of the heater (11) is connected with the inlet of the pump (1).

5. The electric rocket engine forced cooling system according to claim 4, wherein the system is additionally supplied with heat emitting elements (20) configured to heat the working substance and optionally the hydraulic accumulator (4).

6. The electric rocket engine forced cooling system according to claim 4 or 5, wherein the system is additionally supplied with a safety valve (8), an inlet of the safety valve (8) is connected via a tube (7) with the cooling system.

7. An electric rocket engine forced cooling system intended for regulating the temperature conditions of an area thermally affected by electrons and/or plasma ions and/or an electromagnetic field **wherein** the system comprises the following system elements:
a pump (1) configured to provide a continuous flow of working substance in the cooling system, the pump (1) having an inlet and an outlet; a cooling jacket (2) that surrounds and/or is built in to parts of the electric rocket engine that require cooling, the cooling jacket (2) having an inlet and an outlet; a working substance storage reservoir (3), the reservoir (3) having an inlet and a first and second outlet;
a hydraulic accumulator (4) configured to ensure that a required pressure is maintained in the cooling system, the hydraulic accumulator (4) having an inlet and an outlet; a radiator (6) containing one or more segments and configured to dissipate heat energy received from the working substance, wherein the one or more segments are optionally equipped with individual temperature regulators, the radiator (6) having an inlet and an outlet; a thermostatic valve (5) configured to regulate working substance flow through the radiator (6), the thermostatic valve (5) having an inlet and a first and second outlet; a vapor separator (12) configured to separate the working substance into solid and liquid phases, the vapor separator (12) having an inlet and a first and second outlet; a working substance vapor condenser unit (13), the working substance vapor condenser unit (13) having a first and second inlet and a first and second outlet; and a device (14) for detecting and separating vapor-phase working substance, the device (14) for detecting and separating vapor-phase working substance having an inlet and a first and second outlet; and
wherein the system further comprises tubes (7) configured to provide working substance circulation through the cooling system and connecting the abovementioned system elements in the following way: the outlet of the pump (1) is connected with the inlet of the device (14) for detecting and separating vapor-phase working substance, the first outlet of the device (14) for detecting and separating vapor-phase working substance is connected with the inlet of the cooling jacket (2), the second outlet of the device (14) for detecting and separating vapor-phase working substance is connected with the first inlet of the working substance vapor phase condenser unit (13), the first outlet of the working substance vapor-phase condenser unit (13) is connected with the inlet of the reservoir (3), the outlet of the cooling jacket (2) is connected with the inlet of the vapor separator (12), the first outlet of the vapor separator (12) is connected with the second inlet of the working substance vapor-phase condenser unit (13), the second outlet of the vapor separator (12) is connected with the inlet of the reservoir (3), the first outlet of the reservoir (3) is connected with the inlet of the hydraulic accumulator (4), the outlet of the hydraulic accumulator (4) is connected with the inlet of the pump (1), the second outlet of the reservoir (3) is connected with the inlet of the thermostatic valve (5), the first outlet of the thermostatic valve (5) is connected with the inlet of the pump (1), the second outlet of the thermostatic valve (5) is connected with the inlet of the radiator (6), and the outlet of the radiator (6) is connected with the inlet of the pump (1).

8. The electric rocket engine forced cooling system according to claim 7, **wherein** the system is additionally supplied with a safety valve (8), an inlet of the safety valve (8) is connected via a tube (7) with the cooling system.

9. The electric rocket engine forced cooling system according to claims 7 or 8, **wherein** the system is additionally equipped with shutters for the radiator (6), the shutters configured to regulate the active surface area of the radiator (6)

## Patentansprüche

1. Zwangskühlsystem eines elektrischen Raketentriebwerks, das zur Regulierung der Temperaturbedingungen eines Bereichs bestimmt ist, der thermisch von Elektronen und/oder Plasmaionen und/oder einem elektromagnetischen Feld beeinflusst wird. Das System **besteht** dabei aus den folgenden Systemkomponenten: einer Pumpe (1), die so beschaffen ist, dass sie einen kontinuierlichen Fluss von Arbeitsmittel in dem Kühlsystem sicherstellt. Die Pumpe (1) verfügt über einen Einlass und einen Auslass; Einem Kühlmantel (2), der Teile des elektrischen Raketentriebwerks, die gekühlt werden müssen, umgibt und/oder darin eingebaut ist. Der Kühlmantel (2) weist dabei einen Einlass sowie einen ersten und einen zweiten Auslass auf; Einem Behälter (3) zum Speichern des Arbeitsmittels, wobei das Behälter (3) über einen Einlass und einen ersten und einen zweiten Auslass verfügt; Einem Hydraulikspeicher (4), der so beschaffen ist, um dafür zu sorgen, dass ein erforderlicher Druck in dem Kühlsystem aufrechterhalten wird. Der Hydropeicher (4) hat einen ersten und einen zweiten Einlass sowie einen Auslass; Einem Kühler (6), der ein oder mehrere Segmente enthält und so beschaffen ist, dass er die vom Arbeitsmittel erhaltene Wärmeenergie ableitet, wobei das eine oder die mehreren Segmente optional mit individuellen Temperaturreglern ausgestattet sind. Der Kühler (6) verfügt über einen Einlass und einen Auslass; Einem Thermostatventil (5), das so beschaffen ist, dass es den Fluss des Arbeitsmittels durch den Kühler (6) reguliert Das Thermostatventil (5) weist dabei einen Einlass und einen ersten und zweiten Auslass auf. Ferner beinhaltet das System Rohre (7), die so angeordnet sind, dass sie eine Zirkulation des Arbeitsmittels durch das Kühlsystem ermöglichen und die oben genannten Systemkomponenten auf folgende Weise verbinden: der Auslass der Pumpe (1) ist mit dem Einlass des Kühlmantels (2) verbunden, der erste Auslass des Kühlmantels (2) ist mit dem ersten Einlass des Hydropeichers (4) verbunden, der Auslass des Hydrospeichers (4) ist mit dem Einlass der Pumpe (1) verbunden, der zweite Auslass des Kühlmantels (2) ist mit dem Einlass des Behälters (3) verbunden, der zweite Auslass des Kühlmantels (2) ist mit dem Einlass des Behälters (3) verbunden, der erste Auslass des Behälters (3) ist mit dem zweiten Einlass des Hydrospeichers (4) verbunden, der zweite Auslass des Behälters (3) ist mit dem Einlass des Thermostatventils (5) verbunden, der erste Auslass des Thermostatventils (5) ist mit dem Einlass der Pumpe (1) verbunden, der zweite Auslass des Thermostatventils (5) ist mit dem Einlass des Kühlers (6) verbunden, und der Auslass des Kühlers (6) ist mit dem Einlass der Pumpe (1) verbunden.

2. Zwangskühlsystem für ein elektrisches Raketentriebwerk gemäß Patentanspruch 1, **wobei** das System zusätzlich mit wärmeabgebenden Elementen (20) ausgestattet ist, die so beschaffen sind, dass sie das Arbeitsmittel und optional den Hydrospeicher (4) erwärmen.

3. Zwangskühlsystem für ein elektrisches Raketentriebwerk gemäß Patentanspruch 1 oder 2, **wobei** das System zusätzlich mit einem Sicherheitsventil (8) versehen ist, dessen Einlass über ein Rohr (7) mit dem Kühlsystem verbunden ist

4. Zwangskühlsystem eines elektrischen Raketentriebwerks, das zur Regulierung der Temperaturbedingungen eines Bereichs bestimmt ist, der thermisch von Elektronen und/oder Plasmaionen und/oder einem elektromagnetischen Feld beeinflusst wird. Das System **besteht** dabei aus den folgenden Systemkomponenten: Einer Pumpe (1), die so beschaffen ist, dass sie einen kontinuierlichen Strom des Arbeitsmittels in dem Kühlsystem sicherstellt Die Pumpe (1) verfügt dabei über einen Einlass und einen Auslass; Einem Kühlmantel (2), der Teile des elektrischen Raketentriebwerks, die gekühlt werden müssen, umgibt und/oder in sie eingebaut ist Der Kühlmantel (2) weist einen Einlass und einen ersten und einen zweiten Auslass auf; Einem Behälter (3) zum Speichern des Arbeitsmittels, wobei der Behälter (3) über einen Einlass und einen ersten und einen zweiten Auslass verfügt; Einem Hydrospeicher (4), der so beschaffen ist, dass er die Aufrechterhaltung eines erforderlichen Drucks im Kühlsystem gewährleistet Der Hydrospeicher (4) weist dabei einen ersten und einen zweiten Einlass sowie einen Auslass auf; Einem Kühler (6), der ein oder mehrere Segmente enthält und so beschaffen ist, dass er die vom Arbeitsmittel erhaltene Wärmeenergie ableitet, wobei das eine oder die mehreren Segmente optional mit individuellen Temperaturreglern ausgestattet sind. Der Kühler (6) verfügt über einen Einlass und einen Auslass; Einem Thermostatventil (5), das so beschaffen ist, dass es den Fluss des Arbeitsmittels durch den Kühler (6) reguliert Das Thermostatventil (5) weist dabei einen Einlass und einen ersten und zweiten Auslass auf; Einem Triebwerksteile-Heizgerät (11), das über einen Einlass und einen Auslass verfügt; Einem Mischer (10), der über einen ersten und einen zweiten Einlass und einen Auslass verfügt; sowie einem Ventil (9) des Heizgeräts (11), wobei dieses einen Einlass und einen ersten und einen zweiten Auslass aufweist Das System beinhaltet ferner Rohre (7), die so angeordnet sind, dass sie eine Zirkulation des Arbeitsmittels durch das Kühlsystem ermöglichen und die oben genannten Systemkomponenten auf folgende Weise verbinden: der Auslass der Pumpe (1) ist mit dem Einlass des Kühlmantels (2) verbunden, der erste Auslass des Kühlmantels (2) ist mit dem ersten Einlass des Hydrospeichers (4) verbunden, der Auslass des Hydrospeichers (4) ist mit dem Einlass der Pumpe (1) verbunden, der zweite Auslass des Kühlmantels (2) ist mit dem Einlass des Behälters (3) verbunden, der erste Auslass des Behälters (3) ist mit dem zweiten Einlass des Hydrospeichers (4) verbunden, der zweite Auslass des Behälters (3) ist mit dem Einlass des Thermostatventils (5) verbunden, der erste Auslass des Thermostatventils (5) ist mit dem Einlass der Pumpe (1) verbunden, der zweite Auslass des Thermostatventils (5) ist mit dem Einlass des Kühlers (6) und dem ersten Einlass des Mischers (10) verbunden. Der Auslass des Kühlers (6) mit dem Einlass des Ventils (9) des Heizgeräts (11) verbunden. Der erste Auslass des Ventils (9) des Heizgeräts (11) ist mit dem Einlass der Pumpe (1), der zweite Auslass des Ventils (9) des Heizgeräts (11) ist mit dem zweiten Einlass des Mischers (10), der Auslass des Mischers (10) ist mit dem Einlass des Heizgeräts (11) und der Auslass des Heizgeräts (11) ist mit dem Einlass der Pumpe (1) verbunden.

5. Zwangskühlsystem für ein elektrisches Raketentriebwerk gemäß Patentanspruch 4, **wobei** das System zusätzlich mit wärmeabgebenden Elementen (20) ausgestattet ist, die das Arbeitsmittel und optional den Hydrospeicher (4) erwärmen.

6. Zwangskühlsystem für ein elektrisches Raketentriebwerk gemäß Patentanspruch 4 oder 5, **wobei** das System zusätzlich mit einem Sicherheitsventil (8) ausgestattet ist und ein Einlass des Sicherheitsventils (8) über ein Rohr (7) mit dem Kühlsystem verbunden ist.

7. Zwangskühlsystem eines elektrischen Raketentriebwerks, das zur Regulierung der Temperaturbedingungen eines Bereichs bestimmt ist, der thermisch von Elektronen und/oder Plasmaionen und/oder einem elektromagnetischen Feld beeinflusst wird. Das System **besteht** dabei aus den folgenden Systemkomponenten: Einer Pumpe (1), die so beschaffen ist, dass sie einen kontinuierlichen Strom des Arbeitsmittels in dem Kühlsystem sicherstellt Die Pumpe (1) verfügt dabei über einen Einlass und einen Auslass; einen Kühlmantel (2), der Teile des elektrischen Raketentriebwerks, die gekühlt werden müssen, umgibt und/oder in sie eingebaut ist Der Kühlmantel (2) verfügt über einen Einlass und einen Auslass; Einem Arbeitsmittelbehälter (3), wobei dieser über einen Einlass sowie einen ersten und zweiten Auslass verfügt; Einem Hydrospeicher (4), der so beschaffen ist, dass er die Aufrechterhaltung eines erforderlichen Drucks im Kühlsystem sicherstellt Der Hydrospeicher (4) weist dabei einen Einlass und einen Auslass auf; Einem Kühler (6), der ein oder mehrere Segmente enthält und so beschaffen ist, dass er die vom Arbeitsmittel erhaltene Wärmeenergie ableitet Eines oder mehrere Segmente sind optional mit individuellen Temperaturreglern ausgestattet und der Kühler (6) verfügt über einen Einlass und einen; Einem Thermostatventil (5), das so beschaffen ist, dass es den Arbeitsmittelstrom durch den Kühler (6) regelt, wobei das Thermostatventil (5) über einen Einlass sowie einen ersten und einen zweiten Auslass verfügt; Einem Dampfabscheider (12), der so beschaffen ist, dass er das Arbeitsmittel in eine feste und eine flüssige Phase trennt Der Dampfabscheider (12) verfügt über einen Einlass sowie einen ersten und einen zweiten Auslass; Einer Arbeitsmittel-Dampfkondensatoreinheit (13), wobei diese über einen ersten und einen zweiten Einlass sowie einen ersten und einen zweiten Auslass verfügt; und aus einer Vorrichtung (14) zum Erfassen und Abscheiden der Dampfphasen des Arbeitsmittels, wobei diese über einen Einlass sowie einen ersten und zweiten Auslass verfügt Das System besteht ferner aus Rohren (7), die so angeordnet sind, dass sie eine Zirkulation des Arbeitsmittels durch das Kühlsystem ermöglichen und die oben genannten Systemkomponenten auf folgende Weise verbinden: der Auslass der Pumpe (1) ist mit dem Einlass der Vorrichtung (14) zum Erfassen und Abscheiden der Dampfphasen des Arbeitsmittels verbunden; der erste Auslass der Vorrichtung (14) Erfassen und Abscheiden der Dampfphasen des Arbeitsmittels ist mit dem Einlass des Kühlmantels (2) verbunden; der zweite Auslass der Vorrichtung (14) zum Erfassen und Abscheiden der Dampfphasen des Arbeitsmittels ist mit dem ersten Einlass der Arbeitsmittel-Dampfkondensatoreinheit (13) verbunden; der erste Auslass der Arbeitsmittel-Dampfkondensatoreinheit (13) ist mit dem Einlass des Behälters (3) verbunden; der Auslass des Kühlmantels (2) ist mit dem Einlass des Dampfabscheiders (12) verbunden; der erste Auslass des Dampfabscheiders (12) ist mit dem zweiten Einlass der Arbeitsmittel-Dampfkondensatoreinheit (13) verbunden; der zweite Auslass des Dampfabscheiders (12) ist mit dem Einlass des Behälters (3) verbunden; der erste Auslass des Behälters (3) ist mit dem Einlass des Hydrospeichers (4) verbunden; der Auslass des Hydrospeichers (4) ist mit dem Einlass der Pumpe (1) verbunden; der zweite Auslass des Behälters (3) ist mit dem Einlass des Thermostatventils (5) verbunden; der erste Auslass des Thermostatventils (5) ist mit dem Einlass der Pumpe (1) und der zweite Auslass des Thermostatventils (5) ist mit dem Einlass des Kühlers (6) verbunden; schließlich ist der Auslass des Kühlers (6) mit dem Einlass der Pumpe (1) verbunden.

8. Zwangskühlsystem für ein elektrisches Raketentriebwerk gemäß Patentanspruch 7, **wobei** das System zusätzlich mit einem Sicherheitsventil (8) ausgestattet ist und ein Einlass des Sicherheitsventils (8) über ein Rohr (7) mit dem Kühlsystem verbunden ist.

9. Zwangskühlsystem für ein elektrisches Raketentriebwerk gemäß Patentanspruch 7 oder 8, **wobei** das System zusätzlich mit Klappen für den Kühler (6) ausgestattet ist, wobei die Klappen den aktiven Oberflächenbereich des Kühlers (6) regulieren.

## Revendications

1. Système de refroidissement forcé de moteur-fusée électrique prévu pour réguler les conditions de température d'une zone thermiquement affectée par des électrons et/ou des ions de plasma et/ou un champ électromagnétique **dans** lequel le système comprend les éléments système suivants : une pompe (1) configurée pour fournir un écoulement continu de substance de travail dans le système de refroidissement, la pompe (1) ayant une entrée et une sortie ; une chemise de refroidissement (2) qui entoure et/ou est intégrée dans des parties du moteur-fusée électrique qui exigent un refroidissement, la chemise de refroidissement (2) ayant une entrée et des première et seconde sorties ; un réservoir (3) permettant de stocker une substance de travail, le réservoir (3) ayant une entrée et des première et seconde sorties ; un accumulateur hydraulique (4) configuré pour garantir qu'une pression requise est maintenue dans le système de refroidissement, l'accumulateur hydraulique (4) ayant des première et seconde entrées et une sortie ; un radiateur (6) contenant un ou plusieurs segments et configuré pour dissiper l'énergie thermique reçue de la substance de travail, dans lequel le ou les segments sont facultativement équipés de régulateurs de température individuels, le radiateur (6) ayant une entrée et une sortie ; et une vanne thermostatique (5) configurée pour réguler un écoulement de substance de travail à travers le radiateur (6), la vanne thermostatique (5) ayant une entrée et des première et seconde sorties ; et dans lequel le système comprend en outre des tubes (7) configurés pour fournir une circulation de substance de travail à travers le système de refroidissement et raccordant les éléments système susmentionnés de la façon suivante : la sortie de la pompe (1) est raccordée à l'entrée de la chemise de refroidissement (2), la première sortie de la chemise de refroidissement (2) est raccordée à la première entrée de l'accumulateur hydraulique (4), la sortie de l'accumulateur hydraulique (4) est raccordée à l'entrée de la pompe (1), la seconde sortie de la chemise de refroidissement (2) est raccordée à l'entrée du réservoir (3), la première sortie du réservoir (3) est raccordée à la seconde entrée de l'accumulateur hydraulique (4), la seconde sortie du réservoir (3) est raccordée à l'entrée de la vanne thermostatique (5), la première sortie de la vanne thermostatique (5) est raccordée à l'entrée de la pompe (1), la seconde sortie de la vanne thermostatique (5) est raccordée à l'entrée du radiateur (6), et la sortie du radiateur (6) est raccordée à l'entrée de la pompe (1).

2. Système de refroidissement forcé de moteur-fusée électrique selon la revendication 1, **dans** lequel le système est en outre doté d'éléments émetteurs de chaleur (20) configurés pour chauffer la substance de travail et facultativement l'accumulateur hydraulique (4).

3. Système de refroidissement forcé de moteur-fusée électrique selon les revendications 1 ou 2, **dans** lequel le système est en outre doté d'une vanne de sécurité (8), une entrée de la vanne de sécurité (8) est raccordée par l'intermédiaire d'un tube (7) au système de refroidissement.

4. Système de refroidissement forcé de moteur-fusée électrique prévu pour réguler les conditions de température d'une zone thermiquement affectée par des électrons et/ou des ions de plasma et/ou un champ électromagnétique, **dans lequel** le système comprend les éléments système suivants : une pompe (1) configurée pour fournir un écoulement continu de substance de travail dans le système de refroidissement, la pompe (1) ayant une entrée et une sortie ; une chemise de refroidissement (2) qui entoure et/ou est intégrée dans des parties du moteur-fusée électrique qui exigent un refroidissement, la chemise de refroidissement (2) ayant une entrée et des première et seconde sorties ; un réservoir (3) permettant de stocker une substance de travail, le réservoir (3) ayant une entrée et des première et seconde sorties ; un accumulateur hydraulique (4) configuré pour garantir qu'une pression requise est maintenue dans le système de refroidissement, l'accumulateur hydraulique (4) ayant des première et seconde entrées et une sortie ; un radiateur (6) contenant un ou plusieurs segments et configuré pour dissiper de l'énergie thermique reçue de la substance de travail, dans lequel le ou les segments sont facultativement équipés de régulateurs de température individuels, le radiateur (6) ayant une entrée et une sortie ; une vanne thermostatique (5) configurée pour réguler un écoulement de substance de travail à travers le radiateur (6), la vanne thermostatique (5) ayant une entrée et des première et seconde sorties ; un chauffage de parties de moteur (11), le chauffage de parties de moteur (11) ayant une entrée et une sortie ; un mélangeur (10), le mélangeur (10) ayant des première et seconde entrées et une sortie ; et une vanne (9) du chauffage (11), la vanne (9) du chauffage (11) ayant une entrée et des première et seconde sorties ; et dans lequel le système comprend en outre des tubes (7) configurés pour fournir une circulation de substance de travail à travers le système de refroidissement et raccordant les éléments système susmentionnés de la façon suivante : la sortie de la pompe (1) est raccordée à l'entrée de la chemise de refroidissement (2), la première sortie de la chemise de refroidissement (2) est raccordée à la première entrée de l'accumulateur hydraulique (4), la sortie de l'accumulateur hydraulique (4) est raccordée à l'entrée de la pompe (1), la seconde sortie de la chemise de refroidissement (2) est raccordée à l'entrée du réservoir (3), la première sortie du réservoir (3) est raccordée à la seconde entrée de l'accumulateur hydraulique (4), la seconde sortie du réservoir (3) est raccordée à l'entrée de la vanne thermostatique (5), la première sortie de la vanne thermostatique (5) est raccordée à l'entrée de la pompe (1), la seconde sortie de la vanne thermostatique (5) est raccordée à l'entrée du radiateur (6) et à la première entrée du mélangeur (10) ; la sortie du radiateur (6) est raccordée à l'entrée de la vanne (9) du chauffage (11) ; la première sortie de la vanne (9) du chauffage (11) est raccordée à l'entrée de la pompe (1), la seconde sortie de la vanne (9) du chauffage (11) est raccordée à la seconde entrée du mélangeur (10), la sortie du mélangeur (10) est raccordée à l'entrée du chauffage (11), et la sortie du chauffage (11) est raccordée à l'entrée de la pompe (1).

5. Système de refroidissement forcé de moteur-fusée électrique selon la revendication 4, dans lequel le système est en outre doté d'éléments émetteurs de chaleur (20) configurés pour chauffer la substance de travail et facultativement l'accumulateur hydraulique (4).

6. Système de refroidissement forcé de moteur-fusée électrique selon la revendication 4 ou 5, dans lequel le système est en outre doté d'une vanne de sécurité (8), une entrée de la vanne de sécurité (8) est raccordée par l'intermédiaire d'un tube (7) au système de refroidissement

7. Système de refroidissement forcé de moteur-fusée électrique prévu pour réguler les conditions de température d'une zone thermiquement affectée par des électrons et/ou des ions de plasma et/ou un champ électromagnétique **dans lequel** le système comprend les éléments système suivants : une pompe (1) configurée pour fournir un écoulement continu de substance de travail dans le système de refroidissement, la pompe (1) ayant une entrée et une sortie ; une chemise de refroidissement (2) qui entoure et/ou est intégrée dans des parties du moteur-fusée électrique qui exigent un refroidissement, la chemise de refroidissement (2) ayant une entrée etune sortie ; un réservoir de stockage de substance de travail (3) ; le réservoir (3) ayant une entrée et des première et seconde sorties, un accumulateur hydraulique (4) configuré pour garantir qu'une pression requise est maintenue dans le système de refroidissement, l'accumulateur hydraulique (4) ayant une entrée et une sortie ; un radiateur (6) contenant un ou plusieurs segments et configuré pour dissiper de l'énergie thermique reçue de la substance de travail, dans lequel le ou les segments sont facultativement équipés de régulateurs de température individuels, le radiateur (6) ayant une entrée et une sortie ; une vanne thermostatique (5) configurée pour réguler un écoulement de substance de travail à travers le radiateur (6), la vanne thermostatique (5) ayant une entrée et des première et seconde sorties ; un séparateur de vapeur (12) configuré pour séparer la substance de travail en phases solide et liquide, le séparateur de vapeur (12) ayant une entrée et des première et seconde sorties ; une unité de condenseur de vapeur de substance de travail (13), l'unité de condenseur de vapeur de substance de travail (13) ayant des première et seconde entrées et des première et seconde sorties ; et un dispositif (14) permettant de détecter et de séparer une substance de travail en phase vapeur, le dispositif (14) permettant de détecter et de séparer une substance de travail en phase vapeur ayant une entrée et des première et seconde sorties ; et dans lequel le système comprend en outre des tubes (7) configurés pour fournir une circulation de substance de travail à travers le système de refroidissement et raccordant les éléments système susmentionnés de la façon suivante : la sortie de la pompe (1) est raccordée à l'entrée du dispositif (14) permettant de détecter et de séparer une substance de travail en phase vapeur, la première sortie du dispositif (14) permettant de détecter et de séparer une substance de travail en phase vapeur est raccordée à l'entrée de la chemise de refroidissement (2), la seconde sortie du dispositif (14) permettant de détecter et de séparer une substance de travail en phase vapeur est raccordée à la première entrée de l'unité de condenseur de phase vapeur de substance de travail (13), la première sortie de l'unité de condenseur de phase vapeur de substance de travail (13) est raccordée à l'entrée du réservoir (3) ; la sortie de la chemise de refroidissement (2) est raccordée à l'entrée du séparateur de vapeur (12), la première sortie du séparateur de vapeur (12) est raccordée à la seconde entrée de l'unité de condenseur de phase vapeur de substance de travail (13), la seconde sortie du séparateur de vapeur (12) est raccordée à l'entrée du réservoir (3), la première sortie du réservoir (3) est raccordée à l'entrée de l'accumulateur hydraulique (4), la sortie de l'accumulateur hydraulique (4) est raccordée à l'entrée de la pompe (1), la seconde sortie du réservoir (3) est raccordée à l'entrée de la vanne thermostatique (5), la première sortie de la vanne thermostatique (5) est raccordée à l'entrée de la pompe (1), la seconde sortie de la vanne thermostatique (5) est raccordée à l'entrée du radiateur (6), et la sortie du radiateur (6) est raccordée à l'entrée de la pompe (1).

8. Système de refroidissement forcé de moteur-fusée électrique selon la revendication 7, **dans lequel** le système est en outre doté d'une vanne de sécurité (8), une entrée de la vanne de sécurité (8) est raccordée par l'intermédiaire d'un tube (7) au système de refroidissement

9. Système de refroidissement forcé de moteur-fusée électrique selon les revendications 7 ou 8, **dans lequel** le système est en outre équipé de volets pour le radiateur (6), les volets étant configurés pour réguler la superficie active du radiateur (6).
